# EUROPÄISCHE PATENTSCHRIFT

(11) **EP 3 261 907 B1**
(45) Veröffentlichungstag und Bekanntmachung des Hinweises auf die Patenterteilung: **15.08.2018**
(21) Anmeldenummer: 17703335.4
(22) Anmeldetag: 18.01.2017
(51) Int. Cl.: B62D 55/06, B60P 1/02

(54) **TRANSPORTRAUPE**
TRACKED VEHICLE
VÉHICULE DE TRANSPORT À CHENILLES

(30) Priorität: 19.01.2016 DE 202016100230 U
(43) Veröffentlichungstag der Anmeldung: 03.01.2018
(73) Patentinhaber: Meister, Claudia, 64807 Dieburg (DE)
(72) Erfinder: Die Erfindernennung liegt noch nicht vor
(74) Vertreter: Katscher Habermann Patentanwälte
(86) Internationale Anmeldenummer: PCT/EP2017/050965
(87) Internationale Veröffentlichungsnummer: WO 2017/125425

(56) Entgegenhaltungen:
- EP-A2- 1 362 773
- WO-A2-2013/182448
- DE-A1- 2 617 853
- DE-A1- 19 629 454
- DE-C- 977 125
- US-A1- 2015 314 719

## Beschreibung

Die Erfindung betrifft eine Transportraupe mit einer Verbrennungskraftmaschine und mit einer Hydraulikeinheit, wobei die Hydraulikeinheit einen Hydrauliktank und mindestens eine Hydraulikpumpe aufweist und wobei die Verbrennungskraftmaschine mit der Hydraulikpumpe in Wirkverbindung steht.

Solche Transportraupen werden zum Transport schwerer Lasten in unwegsamem Gelände verwendet. Transportraupen sind zu diesem Zweck besonders gut geeignet, da die Transportraupen Kettenlaufwerke zur Übertragung der erforderlichen Antriebskräfte auf den Untergrund aufweisen, die eine vergleichsweise große Aufstandsfläche bieten und daher eine verbesserte Traktion gegenüber Radfahrzeugen vor allem auch auf unbefestigten Wegen und in unwegsamem Gelände aufweisen.

Mit Transportraupen werden beispielsweise auf einer zwischen den Kettenlaufwerken angeordneten Aufnahmeeinrichtung angeordnete Schwerlasten transportiert. Die Transportraupen werden aber auch als Zugmaschinen für Sattelauflieger verwendet, wobei die Aufnahmeeinrichtung zu diesem Zweck eine entsprechende Kupplungseinrichtung aufweist, um die Transportraupe mit dem Sattelauflieger verbinden zu können.

Beispielsweise wird in der Druckschrift WO 2013/182 448 A2 eine als Crawler bezeichnete Transportraupe beschrieben, wobei diese Transportraupe eine Verbrennungskraftmaschine und eine Hydraulikeinheit mit einer Hydraulikpumpe aufweist. Die Hydraulikpumpe wird von der Verbrennungskraftmaschine angetrieben. Aus Schallschutzgründen sind die Hydraulikpumpe und der Verbrennungsmotor in einem gemeinsamen Gehäuse angeordnet. Zur Bereitstellung der für den Antrieb und Betrieb der Transportraupe erforderlichen Hydraulikflüssigkeit weist die in dieser Druckschrift beschriebene Transportraupe zudem einen Hydrauliktank auf. Der Hydrauliktank ist beabstandet zu dem Gehäuse und der darin angeordneten Hydraulikpumpe auf der gegenüberliegenden Seite der Aufnahmeeinrichtung der Transportraupe angeordnet.

Die aus dem Stand der Technik bekannten Transportraupen weisen keine Abgasnachbehandlungseinrichtungen zur Reinigung der von der Verbrennungskraftmaschine erzeugten Abgase auf. Daher werden bei dem Betrieb herkömmlicher Transportraupen erhebliche Schadstoffemissionen an die Umgebung abgegeben.

Als Aufgabe der Erfindung wird es angesehen, die aus dem Stand der Technik bekannten Transportraupen so weiterzuentwickeln, dass ein Schadstoffausstoß durch die Verbrennungskraftmaschinen der Transportraupen vermindert wird.

Diese Aufgabe wird erfindungsgemäß dadurch gelöst, dass die Transportraupe eine Abgasreinigungseinrichtung aufweist, wobei die Abgasreinigungseinrichtung und die Verbrennungskraftmaschine in einem gemeinsamen Antriebsgehäuse angeordnet sind und eine Antriebseinheit bilden und dass die Hydraulikpumpe innerhalb des Hydrauliktanks angeordnet ist, wobei der Hydrauliktank außerhalb des Gehäuses angeordnet ist. Die Schadstoffemissionen können durch die Verwendung einer Abgasreinigungseinrichtung wirkungsvoll verringert werden. Zu diesem Zweck sind aus dem Stand der Technik zahlreiche Verfahren und Vorrichtungen bekannt. So kann die Abgasreinigungseinrichtung erfindungsgemäß unter anderem einen Rußpartikelfilter, einen NOX-Speicherkatalysator, eine Harnstoffeinspritzeinrichtung oder bei Verwendung eines Ottomotors einen Dreiwegekatalysator aufweisen.

Die erfindungsgemäße Anordnung der Abgasreinigungseinrichtung und der Verbrennungskraftmaschine in dem Antriebsgehäuse ermöglicht kurze Abgasleitungen zwischen der Verbrennungskraftmaschine und der Abgasreinigungseinrichtung, sodass für die Abgasleitungen lediglich ein geringer Bauraum erforderlich ist. Zudem können durch kurze Abgasleitungen Abgasenthalpieverluste über die Leitungswandungen verringert werden.

Da der für die verschiedenen Komponenten der Transportraupe zur Verfügung stehende Bauraum grundsätzlich eingeschränkt ist, ist es bei der erfindungsgemäßen Transportraupe vorgesehen, dass die Hydraulikpumpe nicht mehr unmittelbar im Bereich der Verbrennungskraftmaschine in einem gemeinsamen Gehäuse mit der Verbrennungskraftmaschine angeordnet ist, sondern beabstandet zu der Antriebseinheit in dem Hydrauliktank angeordnet ist. Auf diese Weise kann der Schallschutz weiterhin erreicht werden und zudem können auf diese Weise Zuleitungen von dem Hydrauliktank zu der Hydraulikpumpe, sowie auf etwaige Leckageleitungen von der Hydraulikpumpe in den Hydrauliktank verzichtet werden, sodass der erforderliche Bauraum weiter reduziert werden kann.

Die Hydraulikpumpe kann erfindungsgemäß entweder direkt gegebenenfalls über die Verwendung eines Zwischengetriebes von der Verbrennungskraftmaschine angetrieben werden oder über einen separaten, innerhalb oder außerhalb des Hydrauliktanks angeordneten Elektromotor angetrieben werden. Die für den Betrieb des Elektromotors erforderliche elektrische Energie kann erfindungsgemäß durch eine Batterie oder durch eine von der Verbrennungskraftmaschine angetriebenen elektrischen Generator bereitgestellt werden.

Die für die erforderliche Verbindung der Verbrennungskraftmaschine und der Hydraulikpumpe erforderlichen Komponenten benötigen einen vergleichsweise geringen Bauraum, sodass durch die erfindungsgemäße Ausgestaltung und Anordnung der Komponenten des Antriebsstrangs eine Transportraupe mit Abmessungen bereitgestellt werden kann, die im Vergleich zu den bekannten Transportraupen nahezu unverändert sind und gleichzeitig eine wirkungsvolle Abgasreinigung erlauben.

Bei einer besonders vorteilhaften Ausgestaltung der erfindungsgemäßen Transportraupe ist vorgesehen, dass die Hydraulikeinheit zwei innerhalb des Hydrauliktanks angeordnete und von der Verbrennungskraftmaschine angetriebene Hydraulikpumpen aufweist. Durch die Verwendung von zwei innerhalb des Hydrauliktanks angeordneten Hydraulikpumpen kann die Baugröße der einzelnen Hydraulikpumpen im Vergleich zu der Verwendung einer einzelnen Hydraulikpumpe erheblich reduziert werden, wodurch sich weitere Möglichkeiten zur Anordnung der Hydraulikpumpen in dem Hydrauliktank und zur Ausgestaltung der äußeren Form des Hydrauliktanks ergeben. Zudem kann es bei der erfindungsgemäßen Transportraupe vorgesehen sein, dass die Kettenlaufwerke über Hydraulikmotoren angetrieben werden, wobei der erforderliche Druck der Hydraulikflüssigkeit über die Hydraulikpumpen bereitgestellt wird. Durch die Verwendung mehrerer Hydraulikpumpen ist es möglich, jeweils eine Hydraulikpumpe zur Ansteuerung und Versorgung eines Hydraulikmotors eines Kettenlaufwerks zu verwenden.

Vorteilhafterweise ist erfindungsgemäß vorgesehen, dass die Hydraulikpumpen in Serie über eine gemeinsame Antriebswelle betrieben werden. Auf diese Weise wird ein besonders einfacher und kostengünstig zu realisierender Antrieb der Hydraulikpumpen ermöglicht.

Um den Transport schwerer und großer Lasten mit Hilfe der erfindungsgemäßen Transportraupe zu ermöglichen, ist vorteilhafterweise vorgesehen, dass die Transportraupe in Niederflurbauweise ausgestaltet ist, sodass eine von der Transportraupe zu transportierende Last so auf der Transportraupe angeordnet werden kann, dass die Last die Antriebseinheit und die Hydraulikeinheit überdeckt. In diesem Zusammenhang bedeutet Niederflurbauweise, dass sämtliche Komponenten der Transortraupe zwischen den Kettenlaufwerken und möglichst nah zum Erdboden hin angeordnet sind, sodass ein Schwerpunkt der auf einer ebenfalls zwischen den Kettenlaufwerken angeordneten Auflageeinrichtung angeordneten Last möglichst niedrig ist.

Zu diesem Zweck ist erfindungsgemäß vorgesehen, dass eine Hydrauliktankform so an die Transportraupe angepasst ist, dass der Hydrauliktank in einem mittleren Bereich der Transportraupe zwischen Kettenlaufwerken der Transportraupe angeordnet werden kann. Der Hydrauliktank kann beispielsweise aus Stahlblech hergestellt werden und nahezu beliebige, an die Transportraupe angepasste Hydrauliktankformen aufweisen.

Erfindungsgemäß ist vorteilhafterweise vorgesehen, dass das Antriebsgehäuse im Wesentlichen quaderförmig ausgestaltet und in einem vorderen Bereich der Transportraupe zwischen den Kettenlaufwerken angeordnet ist. Durch die Anordnung des Antriebsgehäuses in einem vorderen Bereich der Transportraupe ist das Antriebsgehäuse leicht zugänglich, sodass das gesamte Antriebsgehäuse mit der darin angeordneten Verbrennungskraftmaschine und der Abgasreinigungseinrichtung einfach von der Transportraupe gelöst und ausgetauscht werden kann.

Um eine möglichst niedrige Bauweise der gesamten Transportraupe zu ermöglichen und dadurch einen ausreichend niedrigen Schwerpunkt der Transportraupe zu erreichen, ist erfindungsgemäß vorgesehen, dass die Antriebseinheit und die Hydraulikeinheit so ausgestaltet und an der Transportraupe angeordnet sind, dass dem Erdboden abgewandte Oberseiten der Antriebseinheit und/oder der Hydraulikeinheit in Bezug auf den Erdboden niedriger sind, als Laufwerksoberseiten der Laufwerke oder dass die Oberseiten der Antriebseinheit und/oder der Hydraulikeinheit die Laufwerksoberseiten maximal um 40 Zentimeter überragen.

Bei einer besonders vorteilhaften Ausgestaltung der erfindungsgemäßen Transportraupe ist vorgesehen, dass die Verbrennungskraftmaschine ausschließlich über mindestens einen Silentblock mit weiteren und außerhalb des Gehäuses angeordneten Komponenten der Transportraupe und insbesondere des Antriebsstrangs der Transportraupe verbunden ist, sodass die Antriebseinheit einfach aus der Transportraupe entfernt, in die Transportraupe eingesetzt und auf diese Weise ausgetauscht werden kann. Auf diese Weise ist es erfindungsgemäß auch möglich, die verwendete Verbrennungskraftmaschine einfach und schnell beispielsweise durch einen Elektromotor auszutauschen.

Weitere vorteilhafte Ausgestaltungen der erfindungsgemäßen Transportraupe werden anhand einer in der Zeichnung dargestellten Ausführungsbeispielsweise näher erläutert.

Es zeigt:
Figur 1 eine schematisch, teilweise geschnitten dargestellte Ansicht einer Transportraupe und
Figur 2 eine schematisch dargestellte Draufsicht auf die in Figur 1 dargestellte Transportraupe.

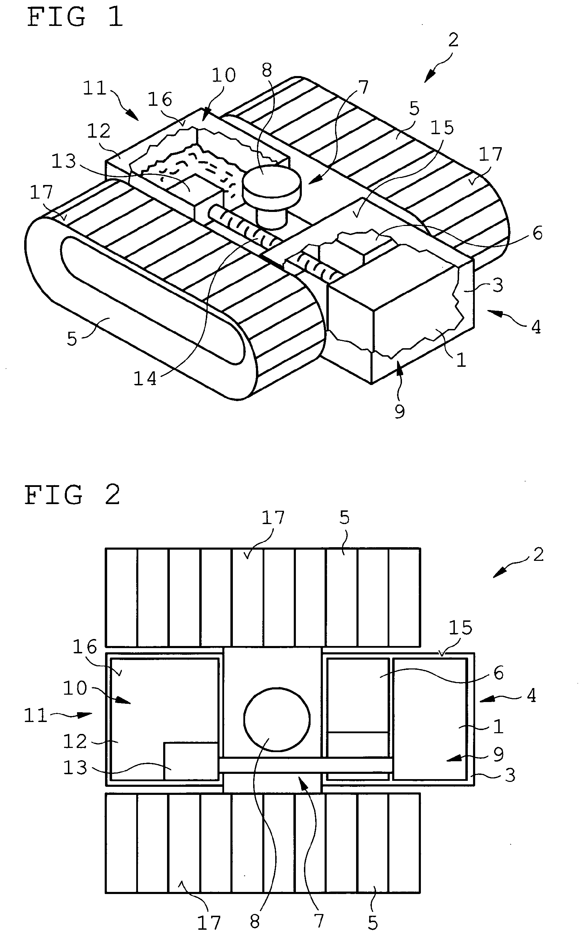

Figuren 1 und 2 zeigen jeweils schematisch eine von einer Verbrennungskraftmaschine 1 angetriebene Transportraupe 2. Die Verbrennungskraftmaschine 1 ist innerhalb eines quaderförmigen Antriebsgehäuses 3 der Transportraupe 2 angeordnet. Das Antriebsgehäuse 3 ist in einem vorderen Bereich 4 zwischen Laufwerken 5 angeordnet.

Um den Schadstoffausstoß der Verbrennungskraftmaschine 2 zu reduzieren, weist die Verbrennungskraftmaschine 2 eine Abgasreinigungseinrichtung 6 auf. Die Abgasreinigungseinrichtung 6 ist ebenfalls in dem Antriebsgehäuse 3 unmittelbar an der Verbrennungskraftmaschine 1 angeordnet. Auf diese Weise kann der für die erforderlichen Abgasleitungen notwendige Bauraum erheblich reduziert werden.

In einem mittleren Bereich 7 der Transportraupe 2 ist eine Aufnahmeeinrichtung 8 zwischen den Laufwerken 5 angeordnet. Die Aufnahmeeinrichtung 8 dient zur Lagerung der zur transportierenden Last, wobei die Aufnahmeeinrichtung 8 beispielsweise auch eine Kupplungseinrichtung zur Ankupplung eines Sattelaufliegers aufweisen kann. Die Transportraupe 2 ist in Niederflurbauweise ausgestaltet, sodass die von der Transportraupe 2 zu transportierende Last so auf der Transportraupe 2 angeordnet werden kann, dass die Last eine aus dem Antriebsgehäuse 3, der Verbrennungskraftmaschine 1 und der Abgasreinigungseinrichtung 6 bestehende Antriebseinheit 9 und eine Hydraulikeinheit 10 überdeckt.

Die Hydraulikeinheit 10 ist in einem hinteren Bereich 11 der Transportraupe 2 zwischen den Laufwerken 5 angeordnet. Die Hydraulikeinheit 10 besteht aus einem Hydrauliktank 12 und einer innerhalb des Hydrauliktanks 12 angeordneten Hydraulikpumpe 13. Die Hydraulikpumpe 13 wird über eine Antriebswelle 14 von der Verbrennungskraftmaschine 1 angetrieben. Die Antriebswelle 14 ist in den Darstellungen der Figuren 1 und 2 schematisch hervorgehoben dargestellt und kann mit einem besonders kleinen Querschnitt ausgeführt und gegebenenfalls über ein Zwischengetriebe mit der Hydraulikpumpe 13 verbunden werden. Eine Hydrauliktankform des Hydrauliktanks 12 ist so ausgestaltet, dass der zwischen den Laufwerken 5 vorhandene Bauraum optimal ausgenutzt wird.

Die Antriebseinheit 9 und die Hydraulikeinheit 10 sind so ausgestaltet und an der Transportraupe 2 angeordnet, dass dem Erdboden abgewandte Oberseiten 15, 16 der Antriebseinheit 9 und der Hydraulikeinheit 10 in Bezug auf den Erdboden niedriger sind, als Laufwerksoberseiten 17 der Laufwerke 5. Auf diese Weise kann die Last besonders tief auf der Transportraupe 2 angeordnet werden.

## Patentansprüche

1. Transportraupe (2) mit einer Verbrennungskraftmaschine (1) und mit einer Hydraulikeinheit (10), wobei die Hydraulikeinheit (10) einen Hydrauliktank (12) und mindestens eine Hydraulikpumpe (13) aufweist und wobei die Verbrennungskraftmaschine (1) mit der Hydraulikpumpe (13) in Wirkverbindung steht, **dadurch gekennzeichnet, dass** die Transportraupe (2) eine Abgasreinigungseinrichtung (6) aufweist, wobei die Abgasreinigungseinrichtung (6) und die Verbrennungskraftmaschine (1) in einem gemeinsamen Antriebsgehäuse (3) angeordnet sind und eine Antriebseinheit (9) bilden und dass die Hydraulikpumpe (13) innerhalb des Hydrauliktanks (12) angeordnet ist, wobei der Hydrauliktank (12) außerhalb des Antriebsgehäuses (3) angeordnet ist.

2. Transportraupe (2) gemäß Anspruch 1, **dadurch gekennzeichnet, dass** die Hydraulikeinheit (10) zwei innerhalb des Hydrauliktanks (12) angeordnete und von der Verbrennungskraftmaschine (1) angetriebene Hydraulikpumpen (13) aufweist.

3. Transportraupe (2) gemäß Anspruch 1 oder Anspruch 2, **dadurch gekennzeichnet, dass** die Hydraulikpumpen (13) in Serie über eine gemeinsame Antriebswelle betrieben werden.

4. Transportraupe (2) gemäß einem der voranstehenden Ansprüche, **dadurch gekennzeichnet, dass** die Transportraupe (2) in Niederflurbauweise ausgestaltet ist, sodass eine von der Transportraupe (2) zu transportierende Last so auf der Transportraupe (2) angeordnet werden kann, dass die Last die Antriebseinheit (9) und die Hydraulikeinheit (10) überdeckt.

5. Transportraupe (2) gemäß Anspruch 4, **dadurch gekennzeichnet, dass** eine Hydrauliktankform so an die Transportraupe (2) angepasst ist, dass der Hydrauliktank (12) in einem mittleren Bereich (7) der Transportraupe (2) zwischen Laufwerken (5) der Transportraupe (2) angeordnet werden kann.

6. Transportraupe (2) gemäß einem der voranstehenden Ansprüche, **dadurch gekennzeichnet, dass** das Antriebsgehäuse (3) im Wesentlichen quaderförmig ausgestaltet und in einem vorderen Bereich (4) der Transportraupe (2) zwischen den Laufwerken (5) angeordnet ist.

7. Transportraupe (2) gemäß einem der voranstehenden Ansprüche, **dadurch gekennzeichnet, dass** die Antriebseinheit (9) und die Hydraulikeinheit (10) so ausgestaltet und an der Transportraupe (2) angeordnet sind, dass dem Erdboden abgewandte Oberseiten (15, 16) der Antriebseinheit (9) und/oder der Hydraulikeinheit (10) in Bezug auf den Erdboden niedriger ist, als Laufwerksoberseiten (17) der Laufwerke (5) oder dass die Oberseiten der Antriebseinheit und/oder der Hydraulikeinheit die Laufwerkoberseiten maximal um 40cm überragen.

8. Transportraupe (2) gemäß einem der voranstehenden Ansprüche, **dadurch gekennzeichnet, dass** die Verbrennungskraftmaschine (1) ausschließlich über mindestens einen Silentblock mit weiteren und außerhalb des Antriebsgehäuses (3) angeordneten Komponenten der Transportraupe (2) und insbesondere des Antriebsstrangs der Transportraupe (2) verbunden ist, sodass die Antriebseinheit (9) einfach aus der Transportraupe (2) entfernt, in die Transportraupe (2) eingesetzt und auf diese Weise ausgetauscht werden kann.

## Claims

1. Transport crawler (2) with an internal combustion engine (1) and with a hydraulic unit (10), wherein the hydraulic unit (10) comprises a hydraulic tank (12) and at least one hydraulic pump (13), and wherein the internal combustion engine (1) is in operative connection with the hydraulic pump (13), **characterized in that** the transport crawler (2) comprises an exhaust gas purification device (6), wherein the exhaust gas purification device (6) and the internal combustion engine (1) are arranged in a common drive housing (3) and form a drive unit (9), and **in that** the hydraulic pump (13) is arranged within the hydraulic tank (12), wherein the hydraulic tank (12) is arranged outside the drive housing (3).

2. Transport crawler (2) according to claim 1, **characterized in that** the hydraulic unit (10) comprises two hydraulic pumps (13) arranged within the hydraulic tank (12) and driven by the internal combustion engine (1).

3. Transport crawler (2) according to claim 1 or claim 2, **characterized in that** the hydraulic pumps (13) are operated in series by a common drive shaft.

4. Transport crawler (2) according to one of the preceding claims, **characterized in that** the transport crawler (2) is configured in a low-platform construction, so that a load to be transported by the transport crawler (2) can be arranged on the transport crawler (2) such that the load covers the drive unit (9) and the hydraulic unit (10).

5. Transport crawler (2) according to claim 4, **characterized in that** a hydraulic tank form is adapted to the transport crawler (2) such that the hydraulic tank (12) can be arranged in a middle region (7) of the transport crawler (2) between tracks (5) of the transport crawler (2).

6. Transport crawler (2) according to one of the preceding claims, **characterized in that** the drive housing (3) is substantially cuboid and is arranged between the tracks (5) in a front region (4) of the transport crawler (2).

7. Transport crawler (2) according to one of the preceding claims, **characterized in that** the drive unit (9) and the hydraulic unit (10) are configured and arranged on the transport crawler (2) such that upper sides (15, 16) of the drive unit (9) and/or the hydraulic unit (10) facing away from the ground is lower with respect to the ground than the track upper sides (17) of the tracks (5), or **in that** the upper sides of the drive unit and/or the hydraulic unit project beyond the drive upper sides by maximally 40 cm.

8. Transport crawler (2) according to one of the preceding claims, **characterized in that** the internal combustion engine (1) is exclusively connected, via at least one silent block, with further components, arranged outside of the drive housing (3), of the transport crawler (2), and in particular of the drive train of the transport crawler (2), so that the drive unit (9) can simply be removed from the transport crawler (2), inserted into the transport crawler (2), and exchanged in this manner.

## Revendications

1. Véhicule de transport à chenilles (2) équipé d'un moteur à combustion interne (1) et d'une unité hydraulique (10), ladite unité hydraulique (10) comprenant un réservoir hydraulique (12) et au moins une pompe hydraulique (13) et le moteur à combustion interne (1) étant en liaison active avec la pompe hydraulique (13), **caractérisé en ce que** le véhicule de transport à chenilles (2) comprend d'un dispositif d'épuration des gaz d'échappement (6), ledit dispositif d'épuration des gaz d'échappement (6) et le moteur à combustion interne (1) étant agencés dans un carter d'entraînement(3) commun et formant une unité d'entraînement (9) et **en ce que** la pompe hydraulique (13) est disposée à l'intérieur du réservoir hydraulique (12), le réservoir hydraulique (12) étant agencé en dehors du carter d'entraînement (3).

2. Véhicule de transport à chenilles (2) selon la revendication 1, **caractérisé en ce que** l'unité hydraulique (10) comprend deux pompes hydrauliques (13) disposées à l'intérieur du réservoir hydraulique (12) et entraînées par le moteur à combustion interne (1).

3. Véhicule de transport à chenilles (2) selon la revendication 1 ou 2, **caractérisé en ce que** les pompes hydrauliques (13) sont entraînées en série par un arbre d'entraînement commun.

4. Véhicule de transport à chenilles (2) selon l'une quelconque des revendications précédentes, **caractérisé en ce que** le véhicule de transport à chenilles (2) est conçu sous forme d'une construction à plancher surbaissé, de sorte qu'une charge à transporter par le véhicule de transport à chenilles (2) peut être placée sur le véhicule de transport à chenilles (2) de sorte que le charge recouvre l'unité d'entraînement (9) et l'unité hydraulique (10).

5. Véhicule de transport à chenilles (2) selon la revendication 4, **caractérisé en ce que** une forme du réservoir hydraulique est adaptée au véhicule de transport à chenilles (2) de telle sorte que le réservoir hydraulique (12) peut être agencé dans une partie centrale (7) du véhicule de transport à chenilles (2) entre les trains de roulement (5) du véhicule de transport à chenilles (2).

6. Véhicule de transport à chenilles (2) selon l'une quelconque des revendications précédentes, **caractérisé en ce que** le carter d'entraînement (3) a une forme essentiellement parallélépipédique et est disposé dans une partie avant (4) du véhicule de transport à chenilles (2) entre les trains de roulement (5).

7. Véhicule de transport à chenilles (2) selon l'une quelconque des revendications précédentes, **caractérisé en ce que** l'unité d'entraînement (9) et l'unité hydraulique (10) sont conçues et agencées sur le véhicule de transport à chenilles (2) de sorte que les parties supérieures (15, 16) détournés au sol de l'unité d'entraînement (9) et/ou de l'unité hydraulique (10) sont plus basses par rapport au sol que les parties supérieures (17) des trains de roulement (5) ou **en ce que** les parties supérieures de l'unité d'entraînement et/ou de l'unité hydraulique dépassent de jusqu'à 40 cm les parties supérieures des trains de roulement.

8. Véhicule de transport à chenilles (2) selon l'une quelconque des revendications précédentes, **caractérisé en ce que** le moteur à combustion interne (1) est relié exclusivement par au moins un silentblock avec d'autres composants du véhicule de transport à chenilles (2) agencés en dehors du carter d'entraînement (3) et en particulier du groupe motopropulseur du véhicule de transport à chenilles (2) de manière à pouvoir facilement retirer l'unité d'entraînement (9) du véhicule de transport à chenilles (2), l'insérer dans le véhicule de transport à chenilles (2) et donc ainsi la remplacer.
